# EUROPÄISCHE PATENTSCHRIFT

(11) **EP 1 194 621 B1**
(45) Veröffentlichungstag und Bekanntmachung des Hinweises auf die Patenterteilung: **30.03.2011**
(21) Anmeldenummer: 00956065.7
(22) Anmeldetag: 06.07.2000
(51) Int. Cl.: D04B 15/48, F16C 27/06

(54) **Fadenliefergerät**
yarn feeding device
fournisseur de fil

(30) Priorität: 12.07.1999 DE 19932485
(43) Veröffentlichungstag der Anmeldung: 10.04.2002
(73) Patentinhaber: Memminger-IRO GmbH, 72280 Dornstetten (DE)
(72) Erfinder: LEINS, Eberhard, D-72160 Horb (DE); SCHMODDE, Hermann, D-72160 Horb-Dettlingen (DE); HORVATH, Attila, D-72250 Freudenstadt (DE)
(74) Vertreter: Frese-Göddeke, Beate
(86) Internationale Anmeldenummer: PCT/DE2000/002206
(87) Internationale Veröffentlichungsnummer: WO 2001/004399

(56) Entgegenhaltungen:
- EP-A- 0 742 304
- FR-A- 1 029 525
- US-A- 4 022 515
- US-A- 4 611 933
- US-A- 5 860 298

## Beschreibung

Die Erfindung betrifft eine Lagereinrichtung, die insbesondere für textiltechnische Geräte, wie bspw. Fadenliefergeräte, vorgesehen ist.

Textiltechnische Geräte, Fadenliefergeräte oder dgl. weisen häufig drehbar gelagerte Wellen oder ähnliche Elemente auf, mit denen andere Elemente, wie bspw. Fadenliefertrommel oder ähnliches, präzise zu lagern sind. An die Genauigkeit der Lagerung werden dabei in der Regel relativ hohe Anforderungen gestellt. Außerdem müssen die Lager meist leichtgängig sein. Vorgeordnete Getriebeelemente wie bspw. Zahnriemen oder anderweitige Riemen, haben häufig eine relativ hohe Nachgiebigkeit. Sind entsprechende Lager nicht konstant leichtgängig, ergibt sich somit ein ungleichmäßiger Lauf der betroffenen Elemente, was meist nicht hinzunehmen ist.

Während die Anforderungen an die Lagerpräzision somit in der Regel hoch sind, sollen textiltechnische Geräte doch meist einfach zusammenzubauen und zu warten sein. Häufig sind außerdem Teile oder Gehäuse aus Kunststoff gefertigt, der infolge von Alterung oder Umgebungseinflüssen (Feuchtigkeit, Temperatur) schrumpfen oder quellen kann, wobei die Kunststoffteile außerdem in der Fertigung immer einer gewissen Toleranz unterliegen. Derartige Toleranzen und zeitbedingte oder umgebungsbedingte Dimensionsänderungen sollen selbstverständlich nicht zu einer Funktionsbeeinträchtigung entsprechender Geräte führen.

Aus der US-PS 5.860.298 ist bspw. ein Fadenliefergerät (Positivfournisseur) bekannt, bei dem an einem Grundhalter eine vertikal orientierte Welle drehbar gelagert ist. Zur Lagerung sind zwei Kugellager vorgesehen, die in entsprechenden zylindrischen Taschen des Grundträgers Aufnahme finden.

Der Lagersitz muss eng toleriert sein, um einen guten Sitz des Lageraußenrings sicherzustellen. Ein- und Ausbau der Lager ist dabei meist nicht ohne Weiteres möglich.

Darüber hinaus ist aus der EP 0742304 A1 eine Fadenzuliefervorrichtung mit einem horizontal geteilten Gehäuse bekannt, in dem mehrere horizontal angeordnete Wellen drehbar gelagert sind, die die Gehäusewand durchragen. In der Gehäusewand sind Lagersitze ausgebildet, die von der Trennfuge durchsetzt werden, die zwischen beiden Gehäusehälften ausgebildet ist. Zur Anpassung an Fertigungstoleranzen oder sonstige Dimensionsschwankungen dient die dem Gehäusematerial inhärente Nachgiebigkeit in Verbindung mit einer lediglich bereichsweisen Anlage des Lageraußenrings an den entsprechenden Flächen des Lagersitzes, ein zwischen Lageraußenring und Lagersitz angeordneter O-Ring oder spezielle elastisch nachgiebige Federelemente im Lagersitz.

Bei diesem Fadenliefergerät werden die Lager von der Gehäusetrennfuge her bei geöffnetem Gehäuse in die entsprechenden Taschen eingesetzt. Das Lager wird dann zwischen den Gehäuseteilen festgeklemmt. Der Aufbau ist wenig toleranzempfindlich, fordert aber eine durch den Lagersitz führende Gehäusefuge.

Aus der FR-A-1029525 ist eine Lagerungseinrichtung zur drehbaren Lagerung einer Welle bekannt, wobei zu der Lagerungseinrichtung ein zylindrischer in einem ruhenden Element ausgebildeter Sitz vorgesehen ist. Zwischen dem zylindrischen Sitz und dem Außenring eines Kugellagers ist ein Elastomerelement angeordnet, dass sich etwas deformieren kann und einen Zwischenraum zwischen den Lageraußenring und der Innenfläche des Lagersitzes überbrückt. Alternativ offenbart diese Druckschrift auch ein entsprechendes Elastomerelement zwischen der Welle und dem Innenring des Kugellagers vorzusehen.

Weiter offenbart die US-A-4,611,933 eine spezielle Lagerkonstruktion zur drehbaren Lagerung einer Tretlagerwelle eines Fahrrads. Das äußere Tretlagerrohr bildet den Lagersitz. Die Tretlagerwelle weist Rillen auf, in denen Kugeln laufen. Die Kugeln werden außen von einem äußeren Lagerring umfasst, der an seiner Außenseite gezahnt ist. Der Außenring ist unter Zwischenlage von Kunststoffbuchsen in das Lagerrohr eingesetzt. Diese sind wenigstens so weit verformbar, dass die Zähne des Außenrings sich in den Kunststoff graben können.

Davon ausgehend ist es Aufgabe der Erfindung, ein Fadenliefergerät mit einer toleranzunempfindlichen Lagereinrichtung zu schaffen, bei dem der Lagersitz ungeteilt ausgebildet sein kann.

Diese Aufgabe wird mit einem Fadenliefergerät nach Anspruch 1 gelöst.

Die Lagereinrichtung des Geräts weist einen Lagersitz auf, der einen Aufnahmeraum für ein Wälzlager und ein Quetschelement festlegt. Das Quetschelement ist an voneinander beabstandeten Bereichen zusammengequetscht, so dass Material des Quetschelements aus den Quetschzonen heraus verdrängt ist. Das Quetschelement sichert ungeachtet etwaiger Toleranzen des Lagersitzes das Wälzlager unverdrehbar in dem Lagersitz und ermöglicht gleichzeitig, dass das Wälzlager leicht in den Lagersitz eingeschoben werden kann. Bedarfsweise kann der Lagersitz deshalb ungeteilt ausgebildet werden.

Das Quetschelement kann als geschlossener Ring oder als streifenförmiges Element ausgebildet sein, das zu einem Ring zusammengelegt ist. Vorzugsweise ist es aus einem Elastomer ausgebildet. Es kann durchgehend eine einheitliche Dicke oder auch lokal verdickte Bereiche aufweisen. Somit können die Quetschzonen durch die Form des Lagersitzes oder durch die Form des Quetschelements definiert werden. Die Deformation des Quetschelements reduziert lokal seine Dicke unter Materialverdrängung. Zum Ausgleich erhöht sich seine Dicke in der Nachbarschaft des komprimierten oder gequetschten Bereichs.

Haben die Quetschelemente verdickte Stellen, kann der Lagersitz z.B. zylindrisch ausgebildet sein. Sind die Quetschelemente gleichmäßig dick, weicht die Form des Lagersitzes von der Kreisform ab, so dass der Abstand zu dem Wälzlager entlang des Umfangs nicht einheitlich ist.

Dazu kann der Lagersitz polygonal oder anderweitig geformt, z.B. mit Vorsprüngen in Richtung auf das Wälzlager versehen sein. Bei einer Ausführungsform weist der Aufnahmeraum sich im Wesentlichen parallel zu der Drehachse des Wälzlagers erstreckende Rippen auf. Die Rippen weisen an ihrer dem Wälzlager zugewandten Seite Stirnflächen auf, die auf einem Kreis liegen, der etwas größer ist als der von dem Lageraußenring des Wälzlagers bestimmte Kreis. Somit entsteht zwischen den Stirnflächen der Rippen und der zylindrischen Außenfläche des Wälzlagers jeweils ein Spiel, das von einem Quetschelement ausgefüllt wird. Dieses stützt sich radial nach außen hin an den Stirnflächen der Rippen ab, während es sich radial nach innen an der Außenfläche des Außenrings abstützt. Das Quetschelement stellt sich dabei auf das tatsächlich vorhandene Spiel ein, so dass Formabweichungen des Lagersitzes Maßabweichungen des Lagersitzes und alterungsbedingte Dimensionsänderungen bis in den 10tel Millimeterbereich hinein den Sitz des Wälzlagers nicht beeinträchtigen. Durch die lediglich streifenförmige Anlage des Quetschelements an den Rippen lässt sich das Wälzlager zudem mit geringen Eindrückkräften axial in den Lagersitz eindrücken und aus diesem bedarfsweise auch wieder herausnehmen. Das Quetschelement liegt dabei vorzugsweise flächig an der Außenfläche des Wälzlagers an, so dass es mit diesem in den Lagersitz eingeschoben werden kann. Die Haftreibung zwischen dem Außenring und dem Quetschelement verhindert, dass sich das Quetschelement gegen den Außenring verschiebt, wohingegen es an den Rippen, mit denen es lediglich eine schmale streifenförmige Anlage hat, leicht entlang gleitet. Dies erleichtert nicht nur Ein- und Ausbau, sondern verhindert auch ein axiales Verspannen des Wälzlagers. Sitzt das Wälzlager in dem Lagersitz, ist sein Außenring zuverlässig gegen Verdrehung gesichert. Außerdem puffert das Quetschelement den Lageraußenring gegen das Gehäuse und gleicht Formabweichungen des Lagersitzes aus.

Der Aufnahmeraum ist vorzugsweise axial nach einer Seite offen, um den Zugang zu dem Wälzlager zu ermöglichen. Bedarfsweise kann der Aufnahmeraum mit einem Abdeckelement verschlossen werden.

Die Rippen sind vorzugsweise relativ schmal ausgebildet, wobei sie in vergleichsweise großem Abstand zueinander angeordnet sind. Dadurch wird es möglich, die mit Quetschelementen versehenen Lager mit geringer Kraft axial in die Lagersitze einzuschieben, wobei jedoch immer ein sicherer und präziser Sitz des Lagers erzielt wird.

Es ist vorteilhaft, wenn die Lücken oder Ausnehmungen zwischen den Rippen ein größeres Volumen aufweisen, als das Volumen des betreffenden aufzunehmenden Abschnitts des Quetschelements. Sitzseitig stützt sich das Lager im Wesentlichen nur über die Rippen ab. Das Quetschelement verteilt die streifen- oder linienförmige Belastung auf eine etwas größere Fläche auf dem Außenumfang des Wälzlagers.

Die Rippen können an der dem Wälzlager zugewandten Seite eine Kante oder eine schmale Anlagefläche aufweisen. Dies kann plan oder gewölbt sein. Es ist dabei zweckmäßig, anzustreben, dass sich zwischen dem Quetschelement und der Rippe nur eine schmale linien- oder streifenförmige Berührungsfläche ergibt. Durch die mögliche Axialmontage kommt der Lagersitz ohne Trennfuge aus. Die Klemmkraft, mit der das Lager im Lagersitz gehalten ist, ist somit unabhängig von Befestigungselementen aufzubringen und zu erzeugen, die bspw. Gehäuseteile zusammenhalten. Der Lagersitz kann geschlossen (fugenlos) ausgebildet werden.

Die Quetschelemente gestatten außerdem eine gewisse Winkeländerung der Lager, so dass es ohne Weiteres möglich wird, Lagersitze für Lager einer Welle an unterschiedlichen Gehäuseteilen vorzusehen. Vorzugsweise können Zentriermittel vorgesehen werden, die eine Fluchtung der Lagersitze wenigstens näherungsweise sicherstellen.

Die Quetschbereiche können in gleichmäßigen Umfangsabständen angeordnet sein. Ist eine Lastaufnahme-Vorzugsrichtung gewünscht, könne die Abstände auch unterschiedlich festgelegt, bspw. in Lastaufnahmerichtung enger festgelegt werden.

Weitere Einzelheiten vorteilhafter Ausführungsformen der Erfindung ergeben sich aus der Zeichnung, der Beschreibung oder Unteransprüchen.

In der Zeichnung ist eine Ausführungsform der Erfindung veranschaulicht. Es zeigen:
Fig. 1 ein Fadenliefergerät in perspektivischer Gesamtansicht,
Fig. 2 das Fadenliefergerät nach Figur 1, in einer Schnittansicht,
Fig. 3 ein Lager mit Quetschelement und Lagersitz des Fadenliefergeräts nach den Figuren 1 und 2, in einer axialen Draufsicht und in einem anderen Maßstab,
Fig. 4 das Lager nach Figur 3, in einer ausschnittsweisen Darstellung und in einem anderen Maßstab,
Fig. 5 die Druckverteilung auf den Lageraußenring in der Nähe einer Rippe des Lagersitzes, als Diagramm,
Fig. 6 ein Lager mit zylindrischem Lagersitz und einem Quetschelement mit festgelegten Quetschbereichen, in vereinfachter Schnittansicht,
Fig. 7 das Quetschelement des Lagers nach Fig. 6 mit undeformierten Quetschbereichen, in ausschnittsweiser Schnittdarstellung, und
Fig. 8 eine abgewandelte Ausführungsform des Lagers, in einer vereinfachten Schnittdarstellung.

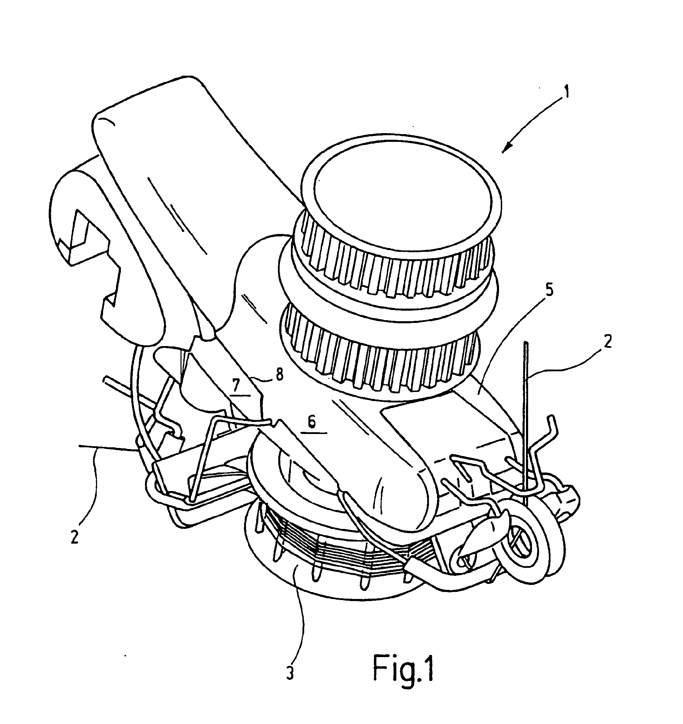

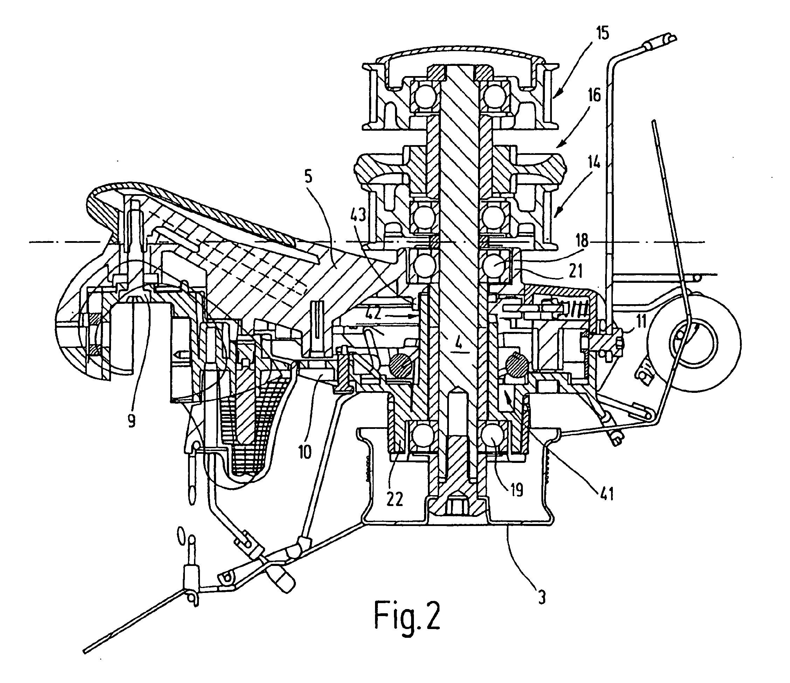

In Figur 1 ist ein Fadenliefergerät 1 veranschaulicht, das zum Zuliefern eines Fadens 2 zu einer Textilmaschine dient. Dazu weist das Fadenliefergerät 1 eine Fadenliefertrommel 3 auf, die von einer Welle 4 (Figur 2) getragen ist. Die Welle 4 ist an einem Grundträger 5 drehbar gelagert, der als zweischaliges Gehäuse ausgebildet ist. Zu dem Grundträger 5 gehören ein oberer Gehäuseteil 6 und ein unterer Gehäuseteil 7, die bei einer Trennfuge 8 aneinander grenzen und aneinander gehalten sind. Dazu sind aus Figur 2 ersichtliche Befestigungsmittel (Schrauben) 9, 10, 11 vorgesehen.

Die Welle 4 ist an ihrem von der Fadenliefertrommel 3 abliegenden Ende mit zwei Antriebsscheiben 14, 15 versehen, die auf der Welle 4 drehbar gelagert und über eine Kupplungsscheibe 16 bedarfsweise mit der Welle 4 drehfest kuppelbar sind.

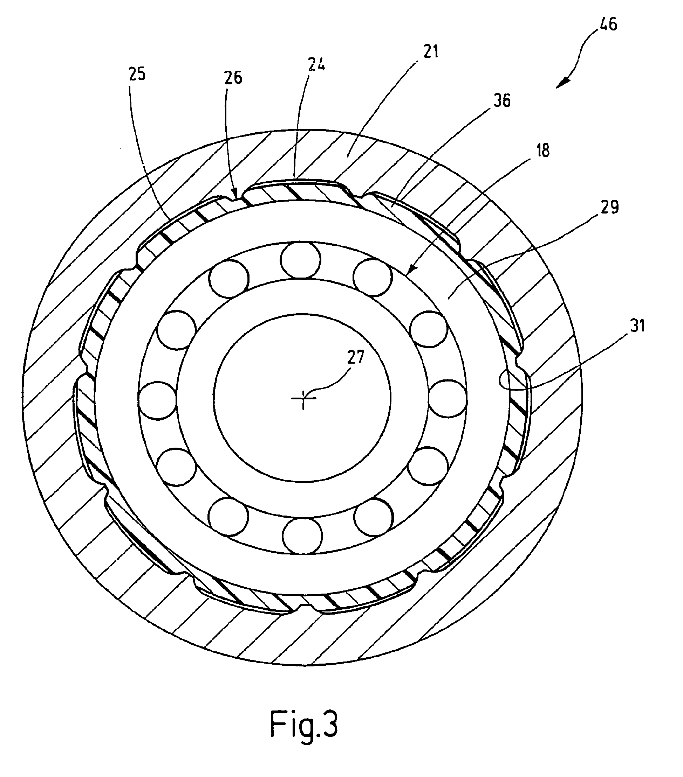

Zur Lagerung der Welle 4 sind zwei Kugellager 18, 19 vorgesehen, von denen eins von dem oberen Gehäuseteil 6 und das andere von dem unteren Gehäuseteil 7 gehalten ist. Dazu sind in den Gehäuseteile 6, 7 jeweils Lagersitze 21, 22 in Form flacher, ungefähr zylindrischer, Taschen ausgebildet. Die Lagersitze 21, 22 werden durch rohrförmige Vorsprünge oder Ansätze an den Gehäuseteilen 6, 7 gebildet. Die Ausbildung der Lagersitze 21, 22 ergibt sich insbesondere aus Figur 3, in der der Lagersitz 21 in Draufsicht veranschaulicht ist. Der Lagersitz 22 ist baulich gleich, so dass die nachfolgende Beschreibung entsprechend gilt.

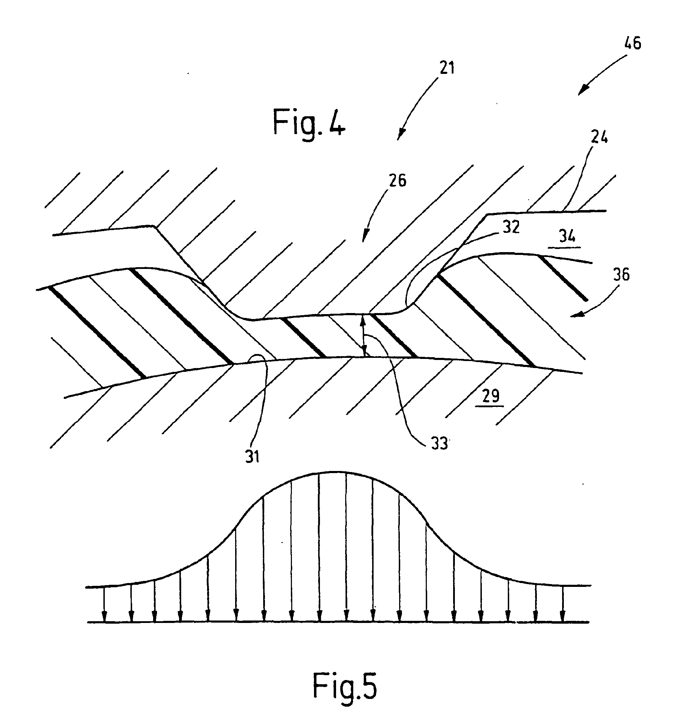

Der Lagersitz 21 weist eine prismatische oder zylindrische Innenform auf. Von der aus gewölbten oder planen Flächenbereichen 24, 25 zusammengesetzten Wandung ragen Rippen 26 radial nach innen vor, die parallel zu einer durch das Kugellager 18 bestimmten Drehachse 27 ausgerichtet sind. Die Rippen 26 sind untereinander gleich ausgebildet und in gleichmäßigen Abständen entlang des Umfangs der Wandung des Lagersitzes 21 verteilt. Jede Rippe 26 weist einen etwa trapezförmigen Querschnitt auf, wie es insbesondere in Figur 4 veranschaulicht ist. Das Kugellager 18 weist einen zylindrischen Außenring 29 auf, dessen Außenfläche 31 mit einer streifenförmigen, dem Außenring 29 zugewandten Stirnfläche 32 einen engen Spalt 33 festlegt. Zwischen benachbarten Rippen 26 sind Aufnahmeräume 34 gebildet, in denen der zwischen dem Flächenbereich 24 (25) und der Außenfläche 31 des Lageraußenrings 29 definierte Spalt deutlich größer ist. Außerdem ist der Abstand zwischen benachbarten Rippen 26, wie aus Figur 3 hervorgeht, deutlich größer als die Breite einer einzelnen Rippe 26. Die Stirnflächen 32, die in Figur 4 als schmale streifenförmige in im Wesentlichen plane Flächenbereiche veranschaulicht sind, können diese Stirnflächen 32 auch auf schmale Kanten reduziert werden, die einen relativ geringen Rundungsradius aufweisen.

Die Stirnflächen 32 sind bspw. parallel zu der Drehachse 27 orientiert und legen somit einen Zylinder fest, der konzentrisch zu der Drehachse 27 angeordnet ist. Alternativ können die Stirnflächen 32 auch etwas zu der Drehachse 27 geneigt sein und somit eine konische Außenform festlegen.

Zwischen dem Lagersitz 21 und dem Lageraußenring 29 des Kugellagers 18 ist ein Quetschelement 36 angeordnet, das aus einem verformbaren Material, vorzugsweise einem federnd nachgiebig verformbaren Material wie bspw. einem Elastomer gebildet ist. Das Quetschelement 36 ist im vorliegenden Ausführungsbeispiel ein ringförmiges Element, das auf der zylindrischen Außenfläche 31 des Außenrings 29 sitzt. Es kann ein gewisses Untermaß aufweisen, um mit einer gewissen Dehnung unter Spannung an der Außenfläche 31 anzuliegen. Die in Axialrichtung gemessene Breite des Quetschelements 36 stimmt vorzugsweise mit der Breite des Lageraußenrings 29 überein. In Radialrichtung weist es eine Dicke auf, die etwas größer ist als die Spaltweite 33, dabei jedoch kleiner als der zwischen der Wandung 24 und der Lageraußenfläche 31 ausgebildete Abstand oder Spalt. Das Quetschelement 36 kann auch durch ein Band oder durch mehrere voneinander getrennte Stücke gebildet sein.

Wie aus Figur 2 hervorgeht, ist die Welle 4 über die beiden im Abstand zueinander angeordneten Kugellager 18, 19 gelagert,'die koaxial fluchtend zueinander angeordnet sind. Dazu sind die beiden Gehäuseteile 6, 7 mit Ausricht- oder Zentriermitteln 41 gegeneinander ausgerichtet. Zu den Zentriermitteln 41 gehört ein bspw. an dem unteren Gehäuseteil 7 ausgebildeter rohrförmiger Fortsatz 42, der konzentrisch zu dem Lagersitz 22 sowie der Welle 4 angeordnet ist und sich durch den Innenraum des Gehäuses 5 auf den oberen Gehäuseteil 6 hin erstreckt. Dieser weist einen ringförmigen Bund 43 auf, der sich auf den rohrförmigen Fortsatz 42 zu erstreckt und ebenfalls konzentrisch zu der Welle 4 angeordnet ist. Die Längen und Durchmesser des Fortsatzes 42 und des Bunds 43 sind so bemessen, dass der Fortsatz 42 in den Bund 43 spielarm oder spielfrei eingreift, wenn die beiden Gehäuseteile 6, 7 aufeinandergesetzt und miteinander verbunden sind. Ein gewisses axiales Spiel ist dabei möglich. Um das Einfinden des Fortsatzes 42 in den Bund 43 zu erleichtern, kann das freie Ende des Fortsatz 42 konisch ausgebildet sein. Zusätzlich oder alternativ kann der Bund 43 mit einem Einführtrichter versehen sein. Es wird auf diese Weise eine Zentriereinrichtung gebildet, die die Fluchtung der Kugellager 18, 19 auch dann sicherstellt, wenn die Gehäuseteile 6, 7 gewissen Herstellungstoleranzen unterliegen. Dies kann insbesondere dann der Fall sein, wenn die Gehäuse in Spritzgusstechniken, bspw. aus Kunststoff hergestellt sind.

Der Lagersitz 21, das Quetschelement 36 und das Kugellager 18 bilden eine Lagereinrichtung 46, deren Funktion nachstehend erläutert ist:

Wird das Gehäuse 5 zusammengefügt, zentriert der Fortsatz 42 den unteren Gehäuseteil 7 zu dem Gehäuseteil 6, so dass die Lagersitze 21, 22 miteinander ausreichend fluchten. Zur weiteren Montage werden nun die Wälzlager 18, 19 jeweils mit einem Quetschelement 36 versehen und in die Lagersitze 21, 22 in Axialrichtung eingeschoben. Dabei gleiten die Rippen 26, die an ihrem nach außen weisenden Ende eine trichterförmige Einführschräge aufweisen können, auf das Quetschelement 26 und drücken sich unter Verformung dessen zunächst zylindrisch gespannter Außenseite in diese ein. Das verdrängte Material findet in den Zwischenräumen zwischen den Rippen 26 ausreichend Platz, so dass das Kugellager 18 ungehindert in den von dem Lagersitz 21 umschlossenen Aufnahmeraum gleiten kann. Die Haftreibung zwischen dem Quetschelement 36 und der Außenfläche 31 verhindert, dass das Quetschelement 36 von dem Lageraußenring 39 heruntergeschoben wird. Die Reibung zwischen dem Quetschelement 36 und den Rippen 26 ist auf kleine Flächenbereiche beschränkt, so dass die hier auftretende Haftreibung wesentlich geringer ist. Das Kugellager 28 lässt sich deshalb leicht in den Lagersitz 21 einschieben. Dies ist unabhängig von der genauen Weite des Spalts 33. Sollten durch Formabweichungen entlang des Umfangs des Kugellagers 18 unterschiedliche Spaltweiten entstehen oder die Spaltweiten insgesamt um wenige 10tel Millimeter vergrößert oder verringert sein, spielt dies für den Sitz des Kugellagers 18 keine Rolle.

Das Kugellager 18 ist in dem Lagersitz in jedem Fall unverdrehbar gehalten. Gegen das Quetschelement 36 ist es durch die großflächige Berührung und die somit ergebende Haftreibung gesichert. Wie Figur 5 veranschaulicht, liegt das Quetschelement unter Radialspannung an der Außenfläche 31 an. Die Radialspannung ist im Bereich der Rippe 26 lokal erhöht, jedoch ansonsten über den gesamten Umfang des Außenrings 29 vorhanden, wodurch ausreichend Haftreibung erzeugt wird.

Das Quetschelement 36 ist im eingebauten Zustand zu dem Lagersitz 21 formschlüssig gegen Verdrehung gesichert. Die Rippen 26 drücken sich in das Quetschelement 36 ein, so dass bezüglich einer Drehung Formschluss und bezüglich einer Axialbewegung Reibschluss vorhanden ist.

Das Quetschelement 36 zentriert das Kugellager 18 in dem Lagersitz 21. Durch seine elastische Nachgiebigkeit können Maß- und Formabweichungen ausgeglichen werden. Bedarfsweise können die Rippen 26 auch so gestaltet sein, dass die Drehachse des Kugellagers 18 um kleinere Winkel verschwenkbar ist. Bspw. können die Rippen 26 zu der Drehachse hin ballig oder gewölbt sein, d.h. die Spaltweite 33 hat, dann ein lokales Minimum etwa in Lagermitte.

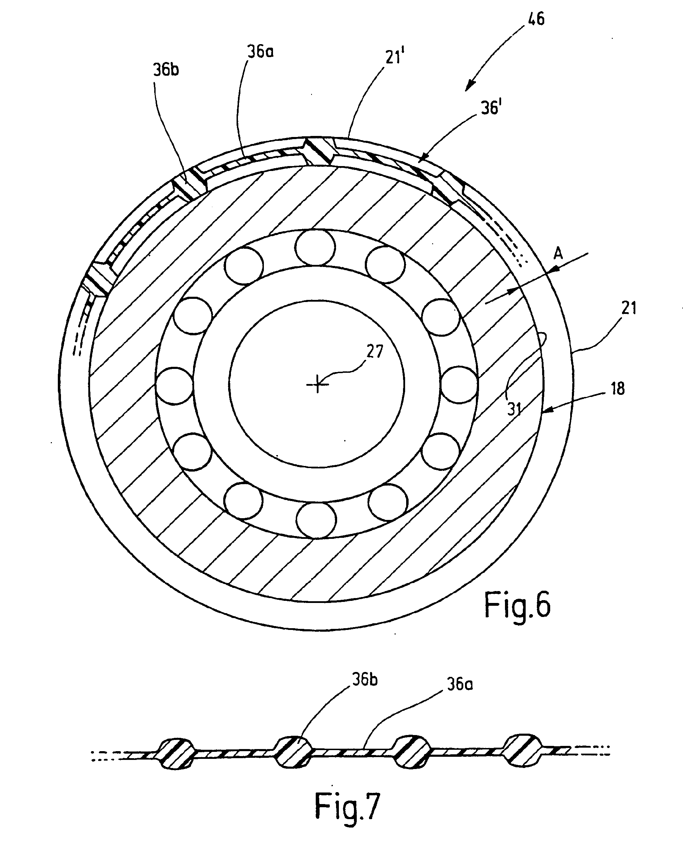

In Figur 6 ist eine weitere Ausführungsform der Lagereinrichtung 46 veranschaulicht, die hinsichtlich des Quetschelements 36 und des Lagersitzes 21 von der vorstehend beschriebenen Ausführungsform abweichend ausgebildet ist. Die Elemente tragen die gleichen Bezugszeichen, die zur Unterscheidung jeweils mit einem Apostroph versehen sind.

Das Quetschelement 36' ist streifen- oder ringförmig ausgebildet und weist eine durchschnittliche Dicke auf, die geringer ist als ein Abstand a zwischen dem Lagersitz 21 und der Außenfläche 31 des Wälzlagers 18. Ausgehend von einem dünnen streifenförmigen Grundkörper 36a sind in gleichmäßigen Abständen in Umfangsrichtung voneinander beabstandete Quetschbereiche 36b vorgesehen, die, wie Figur 7 veranschaulicht, in entspanntem Zustand vorzugsweise etwa einen kreisförmigen Querschnitt aufweisen. Der Durchmesser dieses Querschnitts ist größer als der Abstand a (Figur 6). Die Quetschbereiche 36b sind deshalb deformiert;'so dass Material des aus einem Polymer ausgebildeten Quetschelements 36' seitlich (in Umfangsrichtung) verdrängt wird. In Axialrichtung sind die Quetschbereiche 36b etwa gerade. Sie bilden axial verlaufende, nach innen und/oder außen vorstehende Rippen an dem Quetschelement 36'.

Der Lagersitz 21 weist eine im Wesentlichen zylindrische oder leicht konische Innenfläche auf, um das Wälzlager 18 beim axialen Einschieben in den Lagersitz 21 festzuziehen.

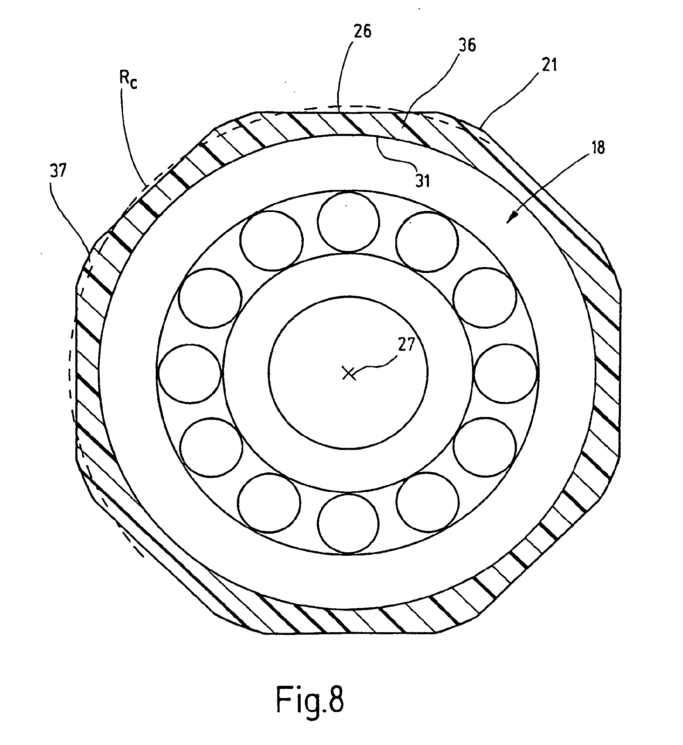

Eine weiter abgewandelte Ausführungsform ist in Figur 8 veranschaulicht. Der Lagersitz 21 weist eine polygonale, bspw. achteckige Kontur auf. Etwa in Kantenmitte jeder dieser im Wesentlichen planen Flächenbereiche 26 ist der Abstand zu der Außenfläche 31 des Wälzlagers 18 am geringsten, so dass hier Quetschbereiche für das aus Elastomer bestehende Quetschelement 36 entstehen. Der entspannte Radius Rₑ desselben ist geringer als der kleinste Abstand zu der Innenfläche des Lagersitzes 21. An den Ecken des polygonalen Lagersitzes 21 sind die Abstände deutlich größer, so dass hier Aufnahmeräume für seitlich (in Umfangsrichtung) verdrängtes Material 37 des Quetschelements 36 entstehen. Auch bei dieser Ausführungsform ist wie bei allen vorbeschriebenen Ausführungsformen das Gesamtvolumen des zwischen dem Lagersitz 21 und der Lageraußenfläche 31 definierten Raums größer als das Volumen des Quetschelements 36. Die durchschnittliche Dicke des Quetschelements 36 ist somit kleiner als der durchschnittliche Abstand zwischen der Innenfläche des Lagersitzes 21 und der Außenfläche 31 des Wälzlagers 18. Das Quetschelement 36 überbrückt den Abstand und füllt den Zwischenraum bereichsweise aus. Die an den Ecken des Lagersitzes 21 verbleibenden Räume sind sowohl zur Aufnahme des Quetschelements 36 in ursprünglicher Dicke als auch mit erhöhter Dicke infolge des zusätzlichen seitlich verdrängten Materials 37 geeignet.

Die Lagereinrichtung 46 wird aus einem Lagersitz 21, einem Wälzlager 18 und einem Quetschelement 36.gebildet. Das Quetschelement liegt flächig an dem Außenring des Wälzlagers 18 und lediglich bereichsweise an entsprechenden Bereichen des Lagersitzes 21 an. Die Bereiche sind vorzugsweise linien- oder streifenförmig und im Wesentlichen axial orientiert. Dies erleichtert das Einsetzen und Ausbauen des Wälzlagers 18 in den bzw. aus dem Lagersitz 21 und verhindert ein Mitdrehen des Lageraußenrings auch bei mit relativ großzügigen Toleranzen versehenen Lagersitzen 21.

## Patentansprüche

1. Fadenliefergerät mit einer Lagereinrichtung (46) mit einem Träger,
mit wenigstens einem Wälzlager (18), das eine Welle (4) konzentrisch zu einer Drehachse (27) drehbar lagert und eine im Wesentlichen zylindrische Außenfläche (31) aufweist,
mit einem an dem Träger ausgebildeten, ungeteilten Lagersitz (21), der einen axial nach einer Seite offenen Aufnahmeraum für das Wälzlager (18) festlegt und einen Zwischenraum zwischen dem Wälzlager (18) und dem Lagersitz (21) festlegt,
**dadurch gekennzeichnet,**
**dass** der Träger als Gehäuse (5) ausgebildet ist,
**dass** das Gehäuse (5) aus Kunststoff ausgebildet ist und
**dass** ein Quetschelement (36) vorgesehen ist, das aus einem Elastomer ausgebildet ist und das in dem Zwischenraum zwischen dem Wälzlager (18) und dem Lagersitz (21) angeordnet und an in Umfangsrichtung beabstandeten Stellen unter Deformation seines Querschnitts zusammengedrückt ist.

2. Gerät nach Anspruch 1, **dadurch gekennzeichnet, dass** das Quetschelement (36) ringförmig, als geschlossener Ring oder streifenförmig ausgebildet ist.

3. Gerät nach Anspruch 1, **dadurch gekennzeichnet, dass** das Quetschelement (36) an seinem gesamten Umfang eine einheitliche Dicke aufweist.

4. Gerät nach Anspruch 1, **dadurch gekennzeichnet, dass** das Quetschelement entlang seines Umfangs verteilte Bereiche aufweist, die eine größere Dicke aufweisen, als dazwischen liegende Bereiche.

5. Gerät nach Anspruch 4, **dadurch gekennzeichnet, dass** der Lagersitz (21) durch eine Zylinderfläche gebildet ist.

6. Gerät nach Anspruch 1, **dadurch gekennzeichnet, dass** der Lagersitz (21) zur Festlegung von Quetschzonen Bereiche aufweist, die einen geringeren Abstand zu dem Wälzlager (18) aufweisen, als dazwischen liegende Bereiche.

7. Gerät nach Anspruch 1, **dadurch gekennzeichnet, dass** das Quetschelement eine Dicke aufweist, die größer bemessen ist, als der Radialabstand zwischen der Außenfläche (31) des Wälzlagers und der gegenüberliegenden Fläche (32) des Lagersitzes (21).

8. Gerät nach Anspruch 6, **dadurch gekennzeichnet, dass** der Lagersitz (21) sich im Wesentlichen parallel zu der Drehachse (27) erstreckende Rippen aufweist, die die Quetschzonen festlegen, wobei die Quetschzonen zu dem Wälzlager (18) hin enger sind als zwischen den Quetschzonen ausgebildete Verdrängungsräume.

9. Gerät nach Anspruch 8, **dadurch gekennzeichnet, dass** der Radialabstand zwischen der Außenfläche (31) des Wälzlagers (18) und den radial nach innen weisenden Flächen der Rippen (26) in Axialrichtung konstant ist.

10. Gerät nach Anspruch 8, **dadurch gekennzeichnet, dass** der Radialabstand zwischen der Außenfläche (31) des Wälzlagers (18) und den radial nach innen weisenden Flächen (32) der Rippen (26) in Axialrichtung abnimmt:

11. Gerät nach Anspruch 8, **dadurch gekennzeichnet, dass** die Rippen (26) in Umfangsrichtung voneinander beabstandet sind, wobei die in Umfangsrichtung zu messenden Abstände zwischen den Rippen (26) größer sind als deren jeweilige Breite.

12. Gerät nach Anspruch 11, **dadurch gekennzeichnet, dass** die Rippen (26) in Umfangsrichtung um mehr als das Fünffache ihrer Breite beabstandet sind.

13. Gerät nach Anspruch 8, **dadurch gekennzeichnet, dass** zwischen den Rippen (26) Aufnahmeräume (34) ausgebildet sind, deren Größe derart bemessen ist, dass von ihnen sowohl die betreffenden Abschnitte des Quetschelements (36) als auch zusätzlich aus Quetschzonen heraus verdrängtes Material ungequetscht aufgenommen wird.

14. Gerät nach Anspruch 8, **dadurch gekennzeichnet, dass** die radial nach innen weisende Flächen (32) der Rippen (26) gewölbt oder plan sind und einen im wesentlichen trapezförmigen Querschnitt aufweisen.

15. Gerät nach Anspruch 1, **dadurch gekennzeichnet, dass** an dem Quetschelement (36) in einheitlichen Abständen voneinander Quetschzonen ausgebildet sind.

16. Gerät nach Anspruch 15, **dadurch gekennzeichnet, dass** die Quetschzonen in unterschiedlichen Abständen zueinander angeordnet sind, wobei die Abstände an einer lasttragenden Seite der Lagereinrichtung (46) geringer sind als in den übrigen Bereichen.

17. Gerät nach Anspruch 1, **dadurch gekennzeichnet, dass** die Lagereinrichtung (46) an einem Gehäuseteil (6) des Fadenliefergeräts (1) ausgebildet ist, das eine weitere derartige Lagereinrichtung (40) zur Lagerung einer Welle (4) aufweist.

18. Gerät nach Anspruch 17, **dadurch gekennzeichnet, dass** die Lagereinrichtungen (46) an unterschiedlichen Gehäuseteilen (6, 7) ausgebildet sind.

19. Gerät nach Anspruch 18, **dadurch gekennzeichnet, dass** den Lagersitzen (21, 22) der Lagereinrichtungen (46) eine zentriereinrichtung (41) zugeordnet ist, die vorzugsweise durch einen in einen Bund (43) ragenden *vorzuasweise rohrförmigen Fortsatz (42) gebildet ist.

## Claims

1. Thread feed device with a bearing mechanism (46) with a carrier, with at least one roller bearing (18), which rotatably mounts a shaft (4) concentrically with respect to a rotational axis (27) and has a substantially cylindrical outer face (31), with an undivided bearing seat (21), which is formed on the carrier and defines a receiving chamber, which is axially open to one side, for the roller bearing (18) and defines an intermediate space between the roller bearing (18) and the bearing seat (21), **characterised in that** the carrier is formed as a housing (5), **in that** the housing (5) is formed from plastics material and **in that** a squeezing element (36) is provided, which is formed from an elastomer and which is arranged in the intermediate space between the roller bearing (18) and the bearing seat (21) and is pressed together at points spaced apart in the peripheral direction with deformation of its cross section.

2. Device according to claim 1, **characterised in that** the squeezing element (36) is formed annularly, as a closed ring or in a strip shape.

3. Device according to claim 1, **characterised in that** the squeezing element (36) has a uniform thickness on its entire periphery.

4. Device according to claim 1, **characterised in that** the squeezing element has regions distributed along its periphery, which have a greater thickness than regions located in between.

5. Device according to claim 4, **characterised in that** the bearing seat (21) is formed by a cylindrical face.

6. Device according to claim 1, **characterised in that** the bearing seat (21) has regions to define squeezing zones, which regions have a smaller spacing from the roller bearing (18) than regions located in between.

7. Device according to claim 1, **characterised in that** the squeezing element has a thickness, which is greater than the radial spacing between the outer face (31) of the roller bearing and the opposing face (32) of the bearing seat (21).

8. Device according to claim 6, **characterised in that** the bearing seat (21) has ribs which extend substantially parallel to the rotational axis (27) and define the squeezing zones, the squeezing zones being narrower toward the roller bearing (18) than displacement spaces formed between the squeezing zones.

9. Device according to claim 8, **characterised in that** the radial spacing between the outer face (31) of the roller bearing (18) and the radially inwardly pointing faces of the ribs (26) is constant in the axial direction.

10. Device according to claim 8, **characterised in that** the radial spacing between the outer face (31) of the roller bearing (18) and the radially inwardly pointing faces (32) of the ribs (26) decreases in the axial direction.

11. Device according to claim 8, **characterised in that** the ribs (26) are spaced apart from one another in the peripheral direction, the spacings between the ribs (26) to be measured in the peripheral direction being larger than their respective width.

12. Device according to claim 11, **characterised in that** the ribs (26) are spaced apart in the peripheral direction by more than five times their width.

13. Device according to claim 8, **characterised in that** receiving chambers (34) are formed between the ribs (26), their size being such that they receive both the relevant portions of the squeezing element (36) and also additionally material displaced from squeezing zones, unsqueezed.

14. Device according to claim 8, **characterised in that** the radially inwardly pointing faces (32) of the ribs (26) are curved or level and have a substantially trapezoidal cross section.

15. Device according to claim 1, **characterised in that** squeezing zones at uniform spacings from one another are formed on the squeezing element (36).

16. Device according to claim 15, **characterised in that** the squeezing zones are arranged at different spacings with respect to one another, the spacings at a load-carrying side of the bearing mechanism (46) being smaller than in the remaining regions.

17. Device according to claim 1, **characterised in that** the bearing mechanism (46) is formed on a housing part (6) of the thread feed device (1), which has a further bearing mechanism (40) of this type for mounting a shaft (4).

18. Device according to claim 17, **characterised in that** the bearing mechanisms (46) are formed on different housing parts (6, 7).

19. Device according to claim 18, **characterised in that** a centring mechanism (41) is associated with the bearing seats (21, 22) of the bearing mechanisms (46) and is preferably formed by a preferably tubular prolongation (42) projecting into a collar (43).

## Revendications

1. Fournisseur de fil avec un dispositif de palier (46) avec un support, avec au moins un palier de roulement (18), qui supporte un arbre (4) de façon rotative concentriquement autour d'un axe de rotation (27) et qui présente une surface extérieure essentiellement cylindrique (31), avec un siège de palier (21) non divisé formé sur le support, qui définit un espace de réception, ouvert axialement vers un côté, pour le palier de roulement (18) et qui définit un espace intermédiaire entre le palier de roulement (18) et le siège de palier (21), **caractérisé en ce que** le support se présente sous la forme d'un boîtier (5), **en ce que** le boîtier (5) est réalisé en matière plastique, et **en ce qu'**il est prévu un élément d'écrasement (36), qui est réalisé en un élastomère et qui est disposé dans l'espace intermédiaire entre le palier de roulement (18) et le siège de palier (21) et comprimé en des points espacés dans la direction périphérique avec déformation de sa section transversale.

2. Dispositif selon la revendication 1, **caractérisé en ce que** l'élément d'écrasement (36) est réalisé sous forme annulaire, sous la forme d'un anneau fermé ou en forme de bande.

3. Dispositif selon la revendication 1, **caractérisé en ce que** l'élément d'écrasement (36) présente une épaisseur uniforme sur toute sa périphérie.

4. Dispositif selon la revendication 1, **caractérisé en ce que** l'élément d'écrasement présente des zones réparties le long de sa périphérie, qui présentent une épaisseur plus forte que des zones situées entre celles-ci.

5. Dispositif selon la revendication 4, **caractérisé en ce que** le siège de palier (21) est formé par une surface cylindrique.

6. Dispositif selon la revendication 1, **caractérisé en ce que** le siège de palier (21) présente, pour la définition de zones d'écrasement, des zones qui présentent une distance plus faiblie par rapport au palier de roulement (18) que des zones situées entre celles-ci.

7. Dispositif selon la revendication 1, **caractérisé en ce que** l'élément d'écrasement présente une épaisseur, qui est de plus grande dimension que la distance radiale entre la surface extérieure (31) du palier de roulement et la surface opposée (32) du siège de palier (21).

8. Dispositif selon la revendication 6, **caractérisé en ce que** le siège de palier (21) présente des nervures s'étendant essentiellement parallèlement à l'axe de rotation (27), qui définissent les zones d'écrasement, dans lequel les zones d'écrasement sont plus étroites en direction du palier de roulement (18) que des espaces de déplacement formés entre les zones d'ébrasement

9. Dispositif selon la revendication 8, **caractérisé en ce que** la distance radiale entre la surface extérieure (31) du palier de roulement (18) et les faces des nervures (26) orientées radialement vers l'intérieur est constante en direction axiale.

10. Dispositif selon la revendication 8, **caractérisé en ce que** la distance radiale entre la surface extérieure (31) du palier de roulement (18) et les faces (32) des nervures (26) orientées radialement vers l'intérieur diminue en direction axiale.

11. Dispositif selon la revendication 8, **caractérisé en ce que** les nervures (26) sont espacées l'une de l'autre en direction périphérique, dans lequel les distances à mesurer en direction périphérique entre les nervures (26) sont plus grandes que la largeur respective de celles-ci.

12. Dispositif selon la revendication 11, **caractérisé en ce que** les nervures (26) sont espacées en direction périphérique de plus du quintuple de leur largeur.

13. Dispositif selon la revendication 8, **caractérisé en ce que** des espaces de réception (34) sont formés entre les nervures (26), avec une grandeur dimensionnée de telle manière qu'ils puissent contenir sans écrasement aussi bien les parties concernées de l'élément d'écrasement (36) que, en plus, la matière déplacée hors des zones d'écrasement.

14. Dispositif selon la revendication 8, **caractérisé en ce que** les faces (32) des nervures (26) orientées radialement vers l'intérieur sont courbes ou planes et présentent une section transversale essentiellement trapézoïdale.

15. Dispositif selon la revendication 1, **caractérisé en ce que** des zones d'écrasement sont formées à des distances uniformes l'une de l'autre sur l'élément d'écrasement (36).

16. Dispositif selon la revendication 15, **caractérisé en ce que** les zones d'écrasement sont disposées à des distances différentes l'une de l'autre, dans lequel les distances sont plus petites sur un côté du dispositif de palier (46) supportant une charge que dans les autres zones.

17. Dispositif selon la revendication 1, **caractérisé en ce que** le dispositif de palier (46) est formé sur une partie de boîtier (6) du fournisseur de fil (1), qui présente un autre dispositif de palier de ce type (40) pour supporter un arbre (4).

18. Dispositif selon la revendication 17, **caractérisé en ce que** les dispositifs de palier (46) sont formés sur différentes parties de boîtier (6, 7).

19. Dispositif selon la revendication 18, **caractérisé en ce qu'**un dispositif de centrage (41) est associé aux sièges de palier (21, 22) des dispositifs de palier (46), en étant formé de préférence par un prolongement de préférence tubulaire (42) s'engageant dans un rebord (43).
